# EUROPEAN PATENT SPECIFICATION

(11) **EP 3 747 670 B1**
(45) Date of publication and mention of the grant of the patent: **27.04.2022**
(21) Application number: 20178452.7
(22) Date of filing: 05.06.2020
(51) Int. Cl.: B60C 1/00, C08K 3/04, C08L 71/03, C08K 3/06, C08K 5/45

(54) **BODY PLY SKIM AND/OR INNERLINER HIGH IMPERMEABILITY COMPOUND**
HOCHIMPERMEABILITÄTSVERBINDUNG FÜR KARKASSENLAGENOBERFLÄCHE UND/ODER INNENSCHICHT
COUCHE DE LIAISON ENTRE PLIS D'UN CORPS ET/OU COMPOSÉ DE REVÊTEMENT INTÉRIEUR À HAUTE IMPERMÉABILITÉ

(30) Priority: 07.06.2019 IT 201900008361
(43) Date of publication of application: 09.12.2020
(73) Proprietor: Bridgestone Europe NV/SA, 1932 Zaventem (BE)
(72) Inventor: FIORENZA, Paolo, 00128 Rome (IT); Lombardi, Roberto, 00128 Roma (IT)
(74) Representative: Marchetti, Alessio

(56) References cited:
- EP-A1- 2 615 131
- EP-A1- 2 954 002
- WO-A1-2014/122622
- US-A1- 2010 181 002

## Description

The present invention relates to a Body Ply Skim and/or innerliner compound comprising a filler system that ensures an improvement in terms of impermeability.

For some time within the pneumatic tyre industry, the need has been especially felt to impart ever greater impermeability to the innerliner layer.

Here and hereinafter, innerliner layer refers to an inner rubber layer which, insofar as it is substantially impermeable to air, is used in tubeless pneumatic tyres in order to maintain under pressure the inflation air confined within the cavity defined by the concavity of the carcass.

Greater impermeability of the innerliner layer ensures lower air diffusion within the carcass, with the consequent advantage of avoiding oxidative degradation phenomena of the rubber portions of the carcass itself and, therefore, of encouraging a greater service life for the pneumatic tyre.

Another need that is especially felt within the pneumatic tyre industry is in relation to the reduction in weight of the pneumatic tyre, with positive effects upon the overall energy consumption of the vehicle and upon the rolling resistance.

As may be immediately obvious to a person skilled in the art, an increase in the impermeability of the innerliner would allow for a decrease in the thickness thereof and, therefore, in less weight for the resulting pneumatic tyre.

Within the context described above, part of the research has focused on increasing the impermeability of that portion of the pneumatic tyre indicated by the English wording "body ply skim" (rubber coating of the carcass plies). Should the body ply skim be rendered highly impermeable, then the thickness of the innerliner could be further reduced. In fact, in this case the action of being impermeable to oxygen would be performed in part by the body ply skim. In this respect, if the impermeability of the body ply skim were to reach high levels it would even be possible to entirely eliminate the presence of the innerliner.

The inventors of the present invention have surprisingly found that by suitably modifying the filler system within the compound, it is possible to impart to the compound itself high impermeability to air characteristics. Such a solution, whether applied to the innerliner compound and/or to the compound of the body ply skim, is able to meet the needs felt by the pneumatic tyre industry, as described above.

The object of the present invention is an innerliner and/or body ply skim rubber compound comprising at least:
- a cross-linkable unsaturated chain polymer base,
- a filler system, and
- a vulcanization system;
said compound being characterized in that said filler system comprises, for at least 50% by weight, a mixture of three types of carbon black; said mixture of three types of carbon black being comprised of:
a first carbon black with a surface area of between 25 and 40 m²/g, a second carbon black with a surface area of between 70 and 90 m²/g and a third carbon black with a surface area of between 800 and 1200 m²/g, wherein said first carbon black constitutes from 80 to 20% by weight of the mixture of at least three types of filler, said second carbon black constitutes from 10 to 40% by weight of the mixture of at least three types of filler, said third carbon black constitutes from 10 to 40% by weight of the mixture of at least three types of filler.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, vulcanization system refers to a complex of ingredients comprising at least sulfur and accelerating compounds, that in the preparation of the compound are added in a final mixing step and have the purpose of promoting the vulcanization of the polymer base once the compound is subjected to a vulcanization temperature.

Preferably, said first carbon black constitutes from 60 to 20% by weight of the mixture of at least three types of filler, said second carbon black constitutes from 20 to 40% by weight of the mixture of at least three types of filler, said third carbon black constitutes from 20 to 40% by weight of the mixture of at least three types of filler.

A further object of the present invention is an innerliner layer and/or body ply skim manufactured using the compound of the present invention.

Another object of the present invention is a pneumatic tyre comprising an innerliner and/or a body ply skim manufactured using the compound of the present invention.

The inventors have based their invention upon the usage of a mixture of fillers having a wide distribution of surface areas. In fact, the inventors have demonstrated that the use, within rubber compounds, of fillers having significantly differing surface areas therebetween (a wide distribution of surface areas) is able to ensure significant improvements in terms of the impermeability to air of the resulting rubber portion.

In other words, the inventors have demonstrated that amongst fillers with significantly different surface areas a synergistic effect, in terms of impermeability to air, is made.

As shown below in the experimental section, it is important to note that the solution of the present invention is able to impart improvements in terms of impermeability to air without increasing the filler content within the compound, but only in modifying the type thereof. In this way, the advantages in terms of impermeability only marginally affect the mechanical characteristics of the resulting rubber portion.

For a better understanding of the invention, the following examples are for illustrative and non-limiting purposes.

### EXAMPLES

Two sets of experimental tests were made using, respectively, a Body Ply Skim compound and an Innerliner compound.

Each set of tests comprises six comparative examples, wherein the filler system comprises a mixture of three types of carbon black, which surface areas do not meet the requirements of the present invention, and five examples of the invention, wherein the filler system comprises a mixture of three carbon blacks which surface areas and which quantities meet the requirements of the present invention.

Especially, it should be highlighted that the comparative examples and the examples of the invention comprise the same quantity of filler (carbon black).

In Tables I - IV are reported, in phr, the compositions of the compounds of the two sets of experimental tests.

Tables I and II respectively refer to the comparison examples (B1 - B6) and the examples of the invention (B7 - B11) with respect to a Body Ply Skim compound; whilst Tables III and IV respectively refer to the comparative examples (I1 - I6) and the examples of the invention (I7 - I11) with respect to an Innerliner compound.

**TABLE I**

| | B1 | B2 | B3 | B4 | B5 | B6 |
|---|---|---|---|---|---|---|
| E-NR | 35 | | | | | |
| Polyepihalohydrin rubber | 65 | | | | | |
| Laminated clay | 50 | | | | | |
| Sulfur | 2 | | | | | |
| MBTS | 0.2 | | | | | |
| TBBS | 0.8 | | | | | |
| N6 | 60 | 50 | 36 | 30 | 20 | 10 |
| N3 | 0 | 5 | 12 | 15 | 20 | 25 |
| N2 | 0 | 5 | 12 | 15 | 20 | 25 |

**TABLE II**

| | B7 | B8 | B9 | B10 | B11 |
|---|---|---|---|---|---|
| E-NR | 35 | | | | |
| Polyepihalohydrin rubber | 65 | | | | |
| Laminated clay | 50 | | | | |
| Sulfur | 2 | | | | |
| MBTS | 0.2 | | | | |
| TBBS | 0.8 | | | | |
| N6 | 50 | 36 | 30 | 20 | 10 |
| N3 | 5 | 12 | 15 | 20 | 25 |
| PRINTEX | 5 | 12 | 15 | 20 | 25 |

**TABLE III**

| | I1 | 12 | 13 | 14 | I5 | 16 |
|---|---|---|---|---|---|---|
| BR-IIR | 100 | | | | | |
| Laminated clay | 30 | | | | | |
| Sulfur | 1 | | | | | |
| MBTS | 2 | | | | | |
| N6 | 50 | 40 | 30 | 25 | 15 | 10 |
| N3 | 0 | 5 | 10 | 12.5 | 17.5 | 20 |
| N2 | 0 | 5 | 10 | 12.5 | 17.5 | 20 |

**TABLE IV**

| | 17 | 18 | 19 | 110 | I11 |
|---|---|---|---|---|---|
| BR-IIR | 100 | | | | |
| Laminated clay | 30 | | | | |
| Sulfur | 1 | | | | |
| MBTS | 2 | | | | |
| N6 | 40 | 30 | 25 | 15 | 10 |
| N3 | 5 | 10 | 12.5 | 17.5 | 20 |
| PRINTEX | 5 | 10 | 12.5 | 17.5 | 20 |

E-NR stands for epoxidized natural rubber, presenting a degree of epoxidation of 25%.

The Polyepihalohydrin rubber is a rubber derived from the epichlorohydrin/ethylene oxide/allyl-glycidyl ether terpolymer marketed as T3000 by the company ZEON.

Br-IIR stands for bromobutyl rubber.

The laminated clay is a mineral filler produced and marketed by BASF with the acronym ASP^{®} NC X-1.

MBTS is the acronym for mercaptobenzothiazole disulfide used as a vulcanization accelerant.

TBBS is the acronym for N-tert-butyl-2-benzothiazole sulfenamide used as a vulcanization accelerant.

N6 denotes a Carbon Black with a surface area equal to 36 m²/g.

N3 denotes a Carbon Black with a surface area equal to 82 m²/g.

N2 denotes a Carbon Black with a surface area equal to 120 m²/g.

PRINTEX denotes a Carbon Black with a surface area equal to 1000 m²/g.

The examples of the invention differ from the comparative examples insofar as they replace the N2 Carbon black with the Printex Carbon black in the same quantities. Especially, the examples B2 - B6 have the same composition respectively as the examples of B7 - B11 but with the replacement of the N2 Carbon black with the Printex Carbon black; whilst the examples 12 - 16 have the same composition respectively as the examples 17 - I11 but with the replacement of the N2 Carbon black with the Printex Carbon black.

### Preparation of the compounds

The compounds were made according to the standard procedure described below, which is not relevant to the present invention.

### (1st mixing step)

Before the start of the mixing, a mixer with tangential rotors (commonly referred to as a Banbury) and an internal volume of between 230 and 270 liters was loaded with the ingredients listed in Tables I - IV, excluding the vulcanization system (sulfur and accelerators), reaching a filling factor of between 66-72%.

The mixer was operated at a speed of 40-60 revolutions/minute, and the mixture thus formed was discharged once a temperature of between 140-160°C had been reached.

### (2^{nd} mixing step)

The vulcanization system (sulfur and accelerators) was added to the mixture obtained from the previous step, reaching a filling factor of 63-67%.

The mixer was operated at a speed of 20-40 revolutions/minute, and the mixture thus formed was discharged once a temperature of between 100-110°C had been reached.

Respective vulcanized rubber specimens were made from the compounds described above. The above mentioned specimens were subjected to tests for permeability to air.

The permeability to air test was performed on materials with a thickness of 0.7 mm and using a conventional apparatus such as the MOCON^{®} OX-TRA^{®} (model 2/61). The measurements were made at a temperature of 25°C.

Tables V and VI list the results obtained from the tests described above.

In order to more immediately highlight the advantages deriving from the present invention, the values were indexed to the respective values relating respectively to the samples deriving from the compounds B1 and I1.

Especially, in Tables V and VI, the lower the values, the better the impermeability characteristic.

**TABLE V - permeability to air**

| | | | | | |
|---|---|---|---|---|---|
| B1 | B2 | B3 | B4 | B5 | B6 |
| **100** | **96** | **89** | **86** | **81** | **74** |
| | B7 | B8 | B9 | B10 | B11 |
| | **90** | **82** | **75** | **60** | **65** |

**TABLE VI - permeability to air**

| | | | | | |
|---|---|---|---|---|---|
| I1 | 12 | 13 | 14 | I5 | 16 |
| **100** | **97** | **91** | **82** | **79** | **76** |
| | I7 | I8 | I9 | I10 | I11 |
| | **93** | **79** | **78** | **62** | **67** |

From the data reported in Tables V and VI, it is clear how the mixture of fillers according to the present invention is able to ensure an improvement in terms of impermeability to air.

Tables V and VI are structured in such a way as to offer immediate evidence of the improvement in terms of impermeability to air by means only of the replacement of the N2 carbon black with the Printex Carbon black, all of the other conditions being equal. In fact, whilst the presence of the N2 Carbon Black does not meet the surface area requirements of the present invention, the Printex Carbon black does meet the surface area requirements of the present invention.

From an analysis of the data shown in Tables V and VI, it is immediately obvious how the interaction of different types of carbon black with surface areas according to the present invention produces a synergistic effect in terms of impermeability to air.

In fact, whilst the permeability values in relation to the comparison examples proceed with a linear progression as a function of the increase in the average surface area of the filler system, the permeability values in relation to the examples of the invention have a curvilinear progression. Such a progression demonstrates that, for the examples of the invention, the increase in the average surface area of the filler system produces an increase in the impermeability to air that is not derived simply from an additive effect but from a synergistic effect amongst the fillers.

## Claims

1. Innerliner and/or body ply skim rubber compound comprising at least:
- a cross-linkable unsaturated chain polymer base,
- a filler system, and
- a vulcanization system;
said compound being **characterized in that** said filler system comprises, for at least 50% by weight, a mixture of three types of carbon black; said mixture of three types of carbon black being comprised of:
a first carbon black with a surface area of between 25 and 40 m²/g, a second carbon black with a surface area of between 70 and 90 m²/g and a third carbon black with a surface area of between 800 and 1200 m²/g, wherein said first carbon black constitutes from 80 to 20% by weight of the mixture of at least three types of filler, said second carbon black constitutes from 10 to 40% by weight of the mixture of at least three types of filler, said third carbon black constitutes from 10 to 40% by weight of the mixture of at least three types of filler .

2. Rubber compound according to claim 1, **characterized in that** said first carbon black constitutes 60 to 20% by weight of the mixture of at least three types of filler, said second carbon black constitutes from 20 to 40% by weight of the mixture of at least three types of filler, said third black carbon constitutes from 20 to 40% by weight of the mixture of at least three types of filler.

3. Innerliner layer, **characterized in that** it is manufactured with the compound according to one of the previous claims.

4. Body ply skim **characterized in that** it is manufactured with a compound according to one of claims 1 to 2.

5. Pneumatic tyre **characterized in that** it comprises an innerliner layer and/or a body ply skim manufactured according to one of claims 1 to 2.

## Patentansprüche

1. Innerliner- und/oder Karkassenlagenskim-Gummimischung, umfassend mindestens:
- eine vernetzbare ungesättigte Polymerkettenbasis,
- ein Füllstoffsystem und
- ein Vulkanisationssystem;
wobei die Mischung **dadurch gekennzeichnet ist, dass** das Füllstoffsystem für mindestens 50 Gew.-% eine Mischung aus drei Rußtypen umfasst; wobei die Mischung aus drei Rußtypen umfasst:
einen ersten Ruß mit einem Oberflächenbereich zwischen 25 und 40 m²/g, einen zweiten Ruß mit einem Oberflächenbereich zwischen 70 und 90 m²/g und einen dritten Ruß mit einem Oberflächenbereich zwischen 800 und 1200 m²/g, wobei der erste Ruß von 80 bis 20 Gew.-% der Mischung von mindestens drei Füllstofftypen ausmacht, der zweite Ruß von 10 bis 40 Gew.-% der Mischung von mindestens drei Füllstofftypen ausmacht, der dritte Ruß von 10 bis 40 Gew.-% der Mischung von mindestens drei Füllstofftypen ausmacht.

2. Gummimischung nach Anspruch 1, **dadurch gekennzeichnet, dass** der erste Ruß 60 bis 20 Gew.-% der Mischung von mindestens drei Füllstofftypen ausmacht, der zweite Ruß von 20 bis 40 Gew.-% der Mischung von mindestens drei Füllstofftypen ausmacht, der dritte Ruß von 20 bis 40 Gew.-% der Mischung von mindestens drei Füllstofftypen ausmacht.

3. Innerlinerschicht, **dadurch gekennzeichnet, dass** sie mit einer Mischung nach einem der vorstehenden Ansprüche gefertigt ist.

4. Karkassenlagenskim, **dadurch gekennzeichnet, dass** es mit einer Mischung nach einem der Ansprüche 1 bis 2 gefertigt ist.

5. Luftreifen, **dadurch gekennzeichnet, dass** er eine Innerlinerschicht und/oder ein Karkassenlagenskim umfasst, die nach einem der Ansprüche 1 bis 2 hergestellt sind.

## Revendications

1. Composé de caoutchouc de gommage de revêtement interne et/ou de nappe carcasse comprenant au moins :
- une base polymère à chaîne insaturée réticulable,
- un système de charge, et
- un système de vulcanisation ;
ledit composé étant **caractérisé en ce que** ledit système de charge comprend, pour au moins 50 % en poids, un mélange de trois types de noir de carbone ; ledit mélange de trois types de noir de carbone étant constitué de :
un premier noir de carbone ayant une zone de surface comprise entre 25 et 40 m²/g, un deuxième noir de carbone ayant une zone de surface comprise entre 70 et 90 m²/g et un troisième noir de carbone ayant une zone de surface comprise entre 800 et 1200 m²/g, dans lequel ledit premier noir de carbone constitue de 80 à 20 % en poids du mélange d'au moins trois types de charge, ledit deuxième noir de carbone constitue de 10 à 40 % en poids du mélange d'au moins trois types de charge, ledit troisième noir de carbone constitue de 10 à 40 % en poids du mélange d'au moins trois types de charge.

2. Composé de caoutchouc selon la revendication 1, **caractérisé en ce que** ledit premier noir de carbone constitue 60 à 20 % en poids du mélange d'au moins trois types de charge, ledit deuxième noir de carbone constitue de 20 à 40 % en poids du mélange d'au moins trois types de charge, ledit troisième carbone noir constitue de 20 à 40 % en poids du mélange d'au moins trois types de charge.

3. Couche de revêtement interne, **caractérisée en ce qu'**elle est fabriquée avec le composé selon l'une des revendications précédentes.

4. Gommage de nappe carcasse **caractérisé en ce qu'**il est fabriqué avec un composé selon l'une des revendications 1 à 2.

5. Pneumatique **caractérisé en ce qu'**il comprend une couche de revêtement intérieur et/ou un gommage de nappe carcasse fabriqué selon l'une des revendications 1 à 2.
